# FASCICULE DE BREVET EUROPEEN

(11) **EP 3 651 286 B1**
(45) Date de publication et mention de la délivrance du brevet: **25.02.2026**
(21) Numéro de dépôt: 19207894.7
(22) Date de dépôt: 08.11.2019
(51) Int. Cl.: H01R 13/639, H01R 13/627, H01R 13/641

(54) **BOITIER DE CONNECTEUR EQUIPE D'UN DISPOSITIF D'ASSURANCE DE POSITION DE CONNECTEUR (CPA) AMELIORE ET PROCÉDÉ D'ACCOUPLEMENT**
ANSCHLUSSGEHÄUSE, DAS MIT EINER VORRICHTUNG ZUR VERBESSERTEN POSITIONSSICHERUNG DES STECKVERBINDERS (CPA) AUSGESTATTET IST UND KOPPLUNGSVERFAHREN
HOUSING FOR CONNECTOR PROVIDED WITH AN IMPROVED CONNECTOR POSITION ASSURANCE (CPA) AND COUPLING PROCESS

(30) Priorité: 12.11.2018 FR 1860420
(43) Date de publication de la demande: 13.05.2020
(73) Titulaire: RAYDIALL, 38500 Voiron (FR)
(72) Inventeur: ANNEQUIN, Sébastien, 38500 VOIRON (FR); DUPREZ, Rémi, 38500 VOIRON (FR)
(74) Mandataire: Ipsilon

(56) Documents cités:
- WO-A1-2017/158566
- WO-A2-2012/096948
- GB-A- 2 246 030
- US-A1- 2004 248 453
- US-B1- 7 326 074

## Description

### Domaine technique

La présente invention concerne les connecteurs du domaine de la connectique de transmission électrique et/ou de données.

Elle concerne plus particulièrement les boitiers de connecteur comprenant un dispositif d'assurance de position de connecteur (CPA).

L'invention s'applique de manière plus générale à tout type de connectique de transmission de signaux électriques et/ou de données et/ou de signaux radio-fréquences (RF).

Une application intéressante est la connectique pour véhicule automobile.

### Art antérieur

Dans le domaine de la connectique de transmission de signaux électriques et/ou de données et/ou de signaux radio-fréquences (RF), il est connu que les connexions électriques, à fibres optiques et autres sont effectuées à l'aide de deux connecteurs s'emboîtant mutuellement, généralement sous la forme de connecteurs mâle et femelle accouplés entre eux.

Chaque connecteur mâle ou femelle comporte des contacts électriques, des fibres optiques ou d'autres conducteurs mutuellement situés et configurés de manière à fournir une connexion entre eux lorsque les connecteurs mâle et femelle sont accouplés entre eux.

Une spécification générale dans le domaine des connecteurs est de s'assurer que, lorsque deux connecteurs complémentaires sont accouplés et verrouillés entre eux, ils ne peuvent pas être déverrouillés par inadvertance au montage ou en utilisation, afin de garantir la connexion électrique, optique, de données. En particulier, il est nécessaire d'éviter le risque selon lequel quand bien même visuellement, de l'extérieur, les connecteurs mâle et femelle complémentaires apparaissent accouplés, de fait ils ne le sont pas.

Un tel désaccouplement par inadvertance au montage ou en utilisation, par exemple suite à des chocs et/ou des vibrations, peut engendrer des dysfonctionnements par rupture du(des) signal(ux) à transmettre entre les connecteurs. Et, un tel désaccouplement qui peut être identifié visuellement comme signifiant un accouplement correct peut être difficile à identifier encore plus dans un produit technologique où les connexions peuvent être très nombreuses, comme par exemple, dans le domaine de la connectique automobile.

A cette fin, il est connu d'équiper un des deux connecteurs complémentaires, avec un dispositif d'assurance de position de connecteur (CPA acronyme anglo-saxon pour « Connection Position Assurance »).

Un dispositif CPA est un élément qui ne peut être déplacé relativement à un boitier de connecteur qui en est équipé, vers une position active dans laquelle il sécurise le verrouillage, que lorsque les connecteurs sont mécaniquement accouplés et verrouillés entre eux, mais qui est bloqué dans le boitier dans une position d'attente de verrouillage, lorsque les connecteurs ne sont pas mécaniquement accouplés et verrouillés entre eux.

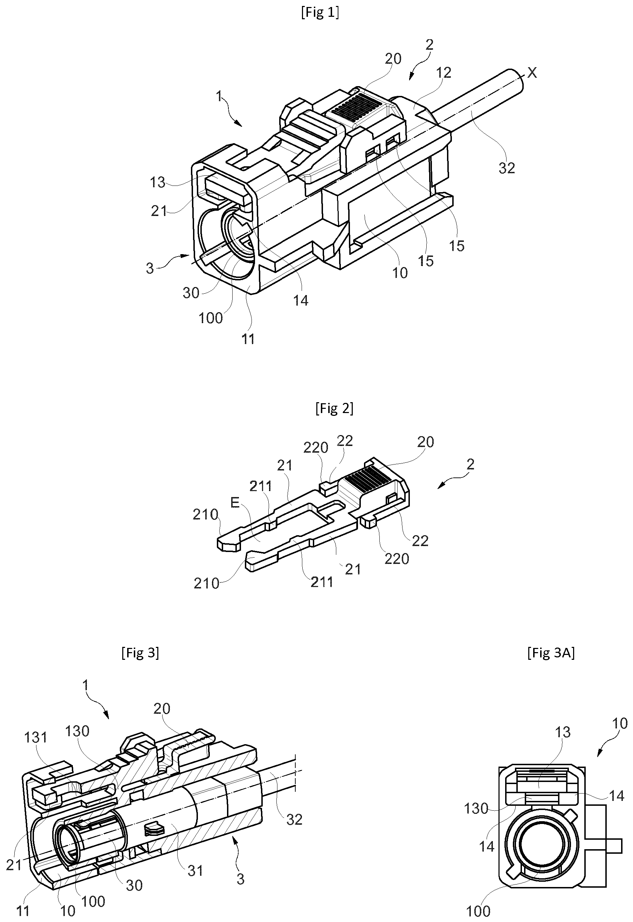

On a représenté aux figures 1 à 3A, un exemple de ce type de connecteur 1 actuellement existant avec un boitier 10, de type femelle, équipé d'un dispositif CPA 2 et dans lequel une terminaison de câble 3 est logée et verrouillée. Ce type de connecteur est également décrit dans la demande de brevet WO2017/158566.

Le conducteur 30 du terminal 3 est destiné à être connecté par accouplement avec un conducteur d'un connecteur complémentaire, non représenté, par la face avant 11 du boitier 10. Le conducteur 30 est maintenu à l'intérieur d'un fût 100 au sein du boitier de connecteur 10.

Le corps 31 du terminal 3 est verrouillé à l'intérieur du boitier 10 et le câble 32 du terminal émerge du boitier 10 par sa face arrière 12.

Le boitier 10 comprend un levier de verrouillage 13 venu de moulage avec le boitier. Le levier 13 est monté pivotant autour d'un pivot 130 et est percé d'une ouverture traversante 131.

Le dispositif CPA 2, réalisé en une seule pièce, est monté dans le boitier 10, entre une position d'attente de verrouillage et une position active de sécurisation de verrouillage.

Le dispositif CPA 2, comprend essentiellement à une de ses extrémités une tête 20 avec une zone d'appui manuel et à l'autre de ses extrémités, deux premières languettes flexibles 21 reliées à la tête 20 et séparées l'une de l'autre d'un espace de dégagement E. L'extrémité libre de chacune de ces premières languettes 21, de préférence identiques, est conformée en excroissance de sécurisation 210, tournée vers l'intérieur de la pièce 2. Ces languettes flexibles 21 sont adaptées pour venir se loger dans des cavités 14 du boitier 10. En outre, l'intérieur de chacune de ces languettes flexibles 21 est munie d'un cran de blocage 211.

Le dispositif CPA 2 comprend en outre des projections 22 reliées également à la tête 20. L'extrémité libre de chacune de ces projections 22, de préférence identiques, est conformée en excroissance ou crans de retenue 220, tournée vers l'extérieur de la pièce 2. Ces excroissances de retenue 220 sont adaptées pour venir s'encliqueter dans des ouvertures traversantes 15 à l'arrière du boitier 10, de sorte à retenir le dispositif CPA 2 à l'intérieur du boitier 10.

Un connecteur complémentaire mâle 5 destiné à être accouplé comprend un boitier 50 à l'intérieur duquel est logé et maintenu un terminal de câble 6 complémentaire au terminal 3 montée et logée dans le boitier 10.

Le boitier 50 comprend sur sa périphérie extérieure un ergot, communément appelé nez de verrouillage 51 pour le verrouillage des boitiers 10, 50 entre eux.

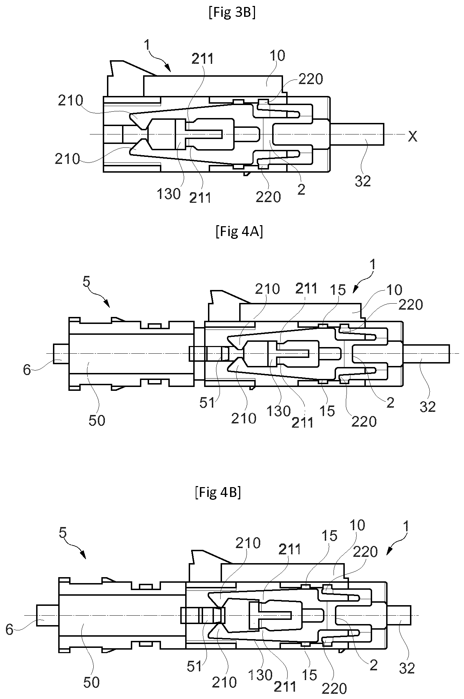

Dans la position d'attente de verrouillage, les deux crans de blocage 211 empêchent le dispositif CPA 2 d'avancer vers l'avant du boitier 10 (figure 4A). En effet, dans cette position, les deux crans 211 sont en contact sur le pivot 130 du boitier 10.

Lors de l'accouplement d'un boitier de connecteur complémentaire 50 avec le boitier 10, l'ergot ou nez 51 prévu à cet effet sur la périphérie du boitier complémentaire, provoque le soulèvement du levier pivotant 13, jusqu'à ce que le nez de verrouillage 51 vienne s'encliqueter dans l'ouverture traversante 131, ce qui provoque le verrouillage de l'accouplement par encliquetage entre les deux boitiers complémentaires 10, 50. Dans cette position de verrouillage, le levier 13 est rabattu par son pivotement vers le boitier 10.

Simultanément avec le soulèvement du levier pivotant 13, le nez de verrouillage du boitier complémentaire vient exercer, en appuyant avec contact direct sur les languettes flexibles 21, un effort de déflexion vers l'extérieur de ces dernières pour laisser passer dans l'espace E, le nez de verrouillage du boitier complémentaire.

Lorsque le nez de verrouillage 51 du boitier 5 vient exercer un effort de déflexion sur les languettes flexibles 21, celles-ci s'écartent l'une de l'autre, ce qui libère les deux crans de blocage 211 du pivot 130 (figure 4B). De ce fait, il est possible d'avancer le CPA 2 dans le boitier 10, vers l'avant de ce dernier.

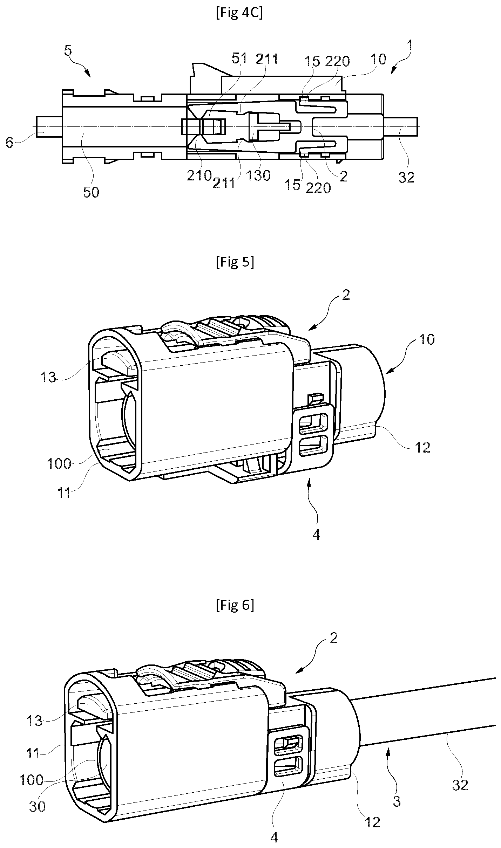

Lors de ce mouvement, les crans de retenue 220 du CPA 2 viennent se loger dans les ouvertures 15 avant du boitier 10 et bloque tout pivotement de la languette 13 (figure 4C). Les crans de retenue 220 garantissent ainsi un effort minimum à fournir pour déverrouiller les deux boitiers complémentaires 10, 50, l'un de l'autre.

Autrement dit, la position active de verrouillage des projections 22 assure une sécurisation mécanique du verrouillage réalisé entre les boitiers complémentaires accouplés entre eux.

L'inconvénient majeur d'un dispositif CPA 2, qui vient d'être décrit, est lié au fait que l'activation, c'est-à-dire la déflexion des languettes flexibles 21 pour les faire passer de leur position d'attente de verrouillage à leur position active de sécurisation du verrouillage, est provoquée par l'appui direct du nez de verrouillage du boitier complémentaire.

En corollaire, cet inconvénient majeur génère des problèmes de robustesse du levier de verrouillage 13. En effet, l'activation directe des languettes flexibles 21 par le nez de verrouillage du boitier complémentaire, nécessite un jeu important pour l'emplacement et la déflexion des languettes 21. De ce fait, comme visible sur la figure 3, l'épaisseur du pivot 130 est faible, ce qui limite sa tenue mécanique et donc induit potentiellement une casse du levier 13.

A la connaissance des inventeurs, cet inconvénient majeur se retrouve dans les dispositifs CPA 2 actuellement connus.

Le brevet US9142919B2 divulgue une solution avec un dispositif CPA fixe car monobloc avec un boitier femelle de connecteur. Lorsque le boitier mâle est accouplé avec le boitier femelle, le nez de verrouillage du boitier mâle soulève une languette flexible de sécurisation du verrouillage du CPA et permet au levier de verrouillage du boitier femelle et au boitier mâle de reculer derrière la languette flexible de verrouillage qui est alors dans sa position active.

La demande de brevet WO2014/060229A1, tout comme le brevet US8137142B1, décrivent chacun une solution avec un dispositif CPA monté coulissant dans un boitier femelle de connecteur. Lorsque le boitier mâle est accouplé avec le boitier femelle, le nez de verrouillage du boitier mâle soulève une languette flexible de sécurisation du verrouillage du CPA qui vient se bloquer dans sa position active contre une paroi intérieure du boitier femelle, au-dessus du levier de verrouillage.

Le brevet US9160095B2 décrit une solution avec un dispositif CPA maintenu par un cran dans un boitier femelle de connecteur, dans sa position d'attente de verrouillage. Lorsque le boitier mâle est accouplé avec le boitier femelle, le nez de verrouillage du boitier mâle appui sur le cran, ce qui permet de débloquer le cran. Le dispositif CPA peut être alors translater, pour venir s'intercaler, dans sa position active de sécurisation de verrouillage, entre le levier de verrouillage du boitier femelle et une excroissance intérieure au boitier femelle.

En plus de l'inconvénient majeur précité avec les problèmes de robustesse des leviers de verrouillage, une activation directe du dispositif CPA par un nez de verrouillage nécessite des formes complexes de boitiers et du dispositif CPA en tant que tel, qui rendent difficiles la réalisation de ces pièces.

Pour positionner le CPA de sa position active de verrouillage, à sa position en attente de verrouillage et ainsi autoriser le déverrouillage des connecteurs entre eux, une simple poussée manuelle pour reculer le CPA est nécessaire.

La demande de brevet WO2012/096948A1 divulgue un connecteur muni d'un boitier et d'un CPA dont la languette est accrochée par sa gorge en prise avec une nervure du boitier, le blocage du CPA à la fois dans la position d'attente et dans la position de sécurisation active du verrouillage étant réalisé respectivement par un accrochage de la partie centrale de la languette sur une saillie à la périphérie du boitier et par butée d'une partie arrière contre une extrémité arrière du boitier.

Le brevet US7326074B1 décrit un boitier de connecteur équipé d'un CPA dont l'excroissance de la languette est bloquée dans sa position d'attente par des excroissances solidaires d'un levier de verrouillage, le déblocage des branches flexibles latérales du CPA étant réalisé par des excroissances ménagées de part et d'autre du nez de verrouillage du boitier complémentaire conçu spécifiquement pour cela et donc non standard, le blocage de ces branches latérales étant réalisé par butée.

Il existe par conséquent un besoin pour améliorer les solutions de sécurisation de verrouillage de connecteurs accouplés et verrouillés entre eux par un dispositif CPA, notamment afin de pallier l'inconvénient majeur précité et des problématiques qui en découlent.

Le but de l'invention est de répondre au moins en partie à ce besoin.

### Exposé de l'invention

Pour ce faire, l'invention concerne un boitier de connecteur, destiné à être accouplé avec un boitier de connecteur complémentaire, le boitier s'étendant selon un axe longitudinal et comprenant :
- un levier de verrouillage solidaire du boitier, le levier étant pivotant autour d'un pivot transversalement à l'axe longitudinal, le levier étant muni d'une ouverture traversante adaptée pour coopérer par encliquetage avec un ergot de verrouillage du boitier de connecteur complémentaire, de sorte à verrouiller le boitier de connecteur et celui complémentaire accouplés;
- un dispositif, dit d'assurance de position de connecteur (CPA), monté coulissant à l'intérieur du boitier entre une position d'attente du verrouillage et une position active dans laquelle il sécurise le verrouillage entre le boitier de connecteur et celui complémentaire, le dispositif CPA comprenant au moins une languette dont l'extrémité libre est conformée en excroissance de sécurisation configurée pour respectivement être :
   - bloquée à l'intérieur d'un premier logement du boitier dans la position d'attente telle qu'elle empêche tout verrouillage avant accouplement du boitier avec le boitier complémentaire,
   - débloquée de sa position d'attente, grâce à un appui avec une partie d'extrémité, distincte de l'ergot, du boitier de connecteur complémentaire, lors de l'insertion de ce dernier
   - bloquée à l'intérieur d'un deuxième logement du boitier dans la position active de sécurisation, telle qu'elle assure un effort de déverrouillage entre le boitier et le boitier complémentaire.

Le levier de verrouillage peut être venu de moulage avec le boitier.

Selon une variante de réalisation avantageuse, la languette est adaptée pour, lorsqu'elle est bloquée dans sa position d'attente, ne pas pouvoir coulisser dans sa position active de sécurisation si aucun accouplement du boitier avec le boitier complémentaire n'est réalisé.

De préférence, la partie d'extrémité du boitier complémentaire qui vient débloquer la languette du dispositif CPA est l'extrémité du logement d'un terminal de câble électrique logée et maintenue dans le boitier complémentaire.

Autrement dit, l'invention consiste à définir un connecteur dont le CPA monté coulissant à l'intérieur du boitier est activé par l'extrémité avant du boitier de connecteur complémentaire qui n'est pas l'ergot, communément appelé nez de verrouillage des boitiers entre eux.

Ainsi, en différentiant clairement les éléments qui doivent remplir des fonctions de verrouillage entre boitiers de connecteur complémentaires, puis de sécurisation de ce verrouillage, cela permet de ne pas avoir les mêmes contraintes de dimensions des boitiers et en particulier des jeux de montage du CPA au sein de l'un des boitiers et de dimensions du levier de verrouillage.

De ce fait, on garantit la robustesse de l'ensemble des composants de verrouillage et de CPA, en particulier du pivot du levier de verrouillage, qui est une source de faiblesse mécanique dans les solutions selon l'état de l'art.

En outre, la solution selon l'invention permet d'empêcher toute activation du CPA si aucun boitier complémentaire n'est accouplé avec le boitier équipé du CPA.

D'autre part, le connecteur selon l'invention peut être connecté à un connecteur classique standardisé complémentaire.

Selon une variante avantageuse, le deuxième logement est adapté pour que l'ergot de verrouillage soit coincé entre l'excroissance, logée dans ledit logement dans sa position active de sécurisation, et le levier. De préférence, le deuxième logement loge l'ergot de verrouillage bloqué par le levier et, l'excroissance dans sa position active de sécurisation.

Selon un mode de réalisation avantageux:
- le levier comprend au moins un cran de maintien;
- le dispositif CPA comprend au moins un cran de maintien adapté pour coopérer avec le cran de maintien du levier lorsque ce dernier est dans une position pivotée durant l'accouplement entre boitiers, de sorte à maintenir le dispositif CPA bloqué en translation.

De préférence, le dispositif CPA comprend au moins une surface de butée adaptée pour se loger en dessous du levier, de sorte à bloquer le pivotement du levier dans la position active du dispositif CPA.

De préférence encore, le dispositif CPA comprend au moins une surface de butée adaptée pour venir bloquer le dispositif CPA contre le boitier, dans la position active du dispositif CPA.

L'invention a également pour objet un connecteur comprenant :
- un boitier de connecteur équipé d'un dispositif CPA tel que décrit précédemment;
- un terminal de câble électrique, logé et monté dans le boitier.

Selon un mode de réalisation avantageux, le connecteur comprend un dispositif dit d'assurance de position du terminal (TPA) qui maintient le terminal dans le connecteur.

L'invention concerne également sous un autre de ses aspects, un procédé d'accouplement et verrouillage sécurisé d'un connecteur tel que décrit précédemment. avec un connecteur (5) complémentaire, comprenant les étapes suivantes :
a/ accouplement des boitiers de connecteurs avec insertion de l'un dans l'autre;
b/ verrouillage mutuel des connecteurs au moyen de l'ergot de verrouillage encliqueté dans l'ouverture traversante du levier;
c/ déplacement en translation du dispositif CPA dégagé de sa position d'attente par une partie d'extrémité du boitier, jusqu'à ce qu'il atteigne sa position active de sécurisation du verrouillage dans laquelle il est logé dans le deuxième logement du boitier.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en perspective d'un exemple de connecteur dont le boitier est équipé d'un dispositif CPA selon l'état de l'art;
- la figure 2 est une vue en perspective du dispositif CPA selon l'état de l'art équipant le boitier de la figure 1;
- la figure 3 est une vue en perspective et coupe longitudinale partielle du connecteur selon la figure 1;
- la figure 3A est une vue en coupe transversale d'un boitier de connecteur selon l'état de l'art tel qu'illustré en figures 1 et 3 ;
- la figure 3B est une vue en coupe longitudinale d'un boitier de connecteur selon l'état de l'art tel qu'illustré en figures 1 et 3 ;
- les figures 4A à 4C sont des vues en coupe longitudinale partielle montrant les différentes étapes d'accouplement et de verrouillage entre deux connecteurs complémentaires selon l'état de l'art, ainsi que d'activation d'un dispositif CPA selon l'état de l'art ;
- la figure 5 est une vue en perspective d'un boitier équipé d'un dispositif CPA selon l'invention ;
- la figure 6 est une vue en perspective d'un connecteur avec un boitier équipé de son dispositif CPA selon la figure 4 et dans lequel est monté et retenu une terminaison de câble;
- les figures 7, 7A, et 7B sont des vues respectivement en perspective, en coupe longitudinale et en perspective avec coupe longitudinale d'un boitier de connecteur selon l'invention avant l'installation de son dispositif CPA ;
- les figures 8, 8A, et 8B sont des vues respectivement en perspective, en coupe longitudinale et en perspective avec coupe longitudinale d'un dispositif CPA avant son installation dans un boitier de connecteur selon les figures 7 à 7B;
- les figures 9 et 9A sont respectivement une vue en perspective avec coupe longitudinale et une vue de détail d'un connecteur selon l'invention comme illustré en figure 5 ;
- les figures 10A à 10E sont des vues en perspective montrant les différentes étapes d'accouplement et de verrouillage d'un connecteur selon l'invention avec un connecteur complémentaire, ainsi que d'activation d'un dispositif CPA conforme à l'invention.

Les figures 1 à 4C relatives à un connecteur avec boitier équipé d'un dispositif CPA selon l'état de l'art ont été décrites dans le préambule. Elles ne seront donc pas commentées ci-après.

Par souci de clarté, un même élément structurel d'un connecteur selon l'état de l'art et selon l'invention est désigné avec la même référence numérique.

On précise ici dans l'ensemble de la présente demande, les termes « inférieur», « supérieur », « dessus », « dessous », « intérieur », « extérieur », « « interne », « externe» sont à comprendre par référence à un connecteur selon l'invention en configuration sensiblement à l'horizontal.

Tel qu'illustré en figures 5 et 6, un connecteur 1 de type femelle selon l'invention comprend un boitier 10 dans lequel est monté coulissant un dispositif CPA 2 et qui loge un terminal 3 de câble électrique et/ou de données qui est maintenue au moyen d'un autre dispositif amovible 4, dit « Terminal Position Assurance » (TPA). Le TPA n'est pas obligatoire.

Le dispositif TPA 4 est décrit et revendiqué dans la demande de brevet intitulée *«Boitier de connecteur équipé d'un dispositif d'assurance de position de connecteur (CPA) amélioré »,* déposée au nom de la demanderesse, le même jour que la présente demande.

Le conducteur 30 du terminal 3 est destiné à être connecté par accouplement avec un conducteur 60 d'un connecteur complémentaire 6, par la face avant 11 du boitier 10. Le conducteur 30 est maintenu à l'intérieur d'un fût 100 au sein du boitier de connecteur 10.

Le corps 31 du terminal 3 est verrouillé à l'intérieur du boitier 10 et le câble 32 du terminal émerge du boitier 10 par sa face arrière 12.

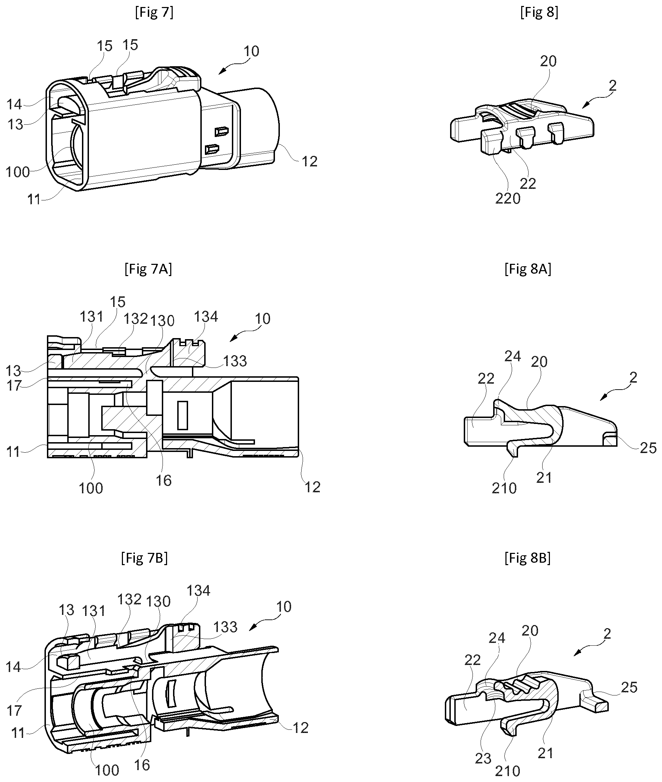

Tel qu'illustré en figures 7 à 7B, le boitier 10 comprend un levier de verrouillage 13 venu de moulage avec le boitier. Le levier 13 est monté pivotant autour d'un pivot 130 et est percé d'une ouverture traversante 131.

Le levier de verrouillage 13 comprend en outre :
- sur sa périphérie extérieure au moins un cran de maintien 132 adapté pour maintenir le dispositif CPA 2 dans une position comme expliqué par la suite ;
- une surface intérieure de butée 133 adaptée pour bloquer le dispositif CPA 2 dans sa position d'attente ;
- une surface extérieure d'appui 134 adaptée pour permettre un appui manuel afin de faire pivoter le levier autour de son pivot 130.

Le boitier 10 comprend également dans sa partie intérieure au-dessus du fût 100, un premier logement traversant 16 adapté pour bloquer le dispositif CPA 2 dans sa position d'attente ainsi qu'un deuxième logement traversant 17 adapté pour bloquer le dispositif CPA 2 dans sa position active.

Le dispositif CPA 2, réalisé en une seule pièce, est monté dans le boitier 10, entre une position d'attente de verrouillage et une position active de sécurisation de verrouillage, comme expliqué par la suite.

Le dispositif CPA 2, comprend essentiellement à une de ses extrémités une tête 20 avec une zone d'appui manuel et à l'autre de ses extrémités, des projections 22 reliées à la tête 20. L'extrémité libre de chacune de ces projections 22, de préférence identiques, est conformée en excroissance de retenue 220, tournée vers l'extérieur de la pièce 2. Ces excroissances de retenue 220 sont adaptées pour venir s'encliqueter dans des dégagements 15 dans le boitier 10, de sorte à retenir le dispositif CPA 2 à l'intérieur du boitier 10, quelle que soit sa position, d'attente de verrouillage ou active de verrouillage.

Une languette flexible 21 reliée à la tête 20 fait saillie vers l'extérieur. L'extrémité libre de cette languette 21 est conformée en excroissance de sécurisation 210, tournée vers l'extérieur de la pièce 2. Cette languette flexible 21 est adaptée pour venir se loger dans l'un puis l'autre des logements 16, 17 du boitier 10 selon la position respectivement d'attente ou active du CPA 2.

Le dispositif CPA 2 comprend en outre un cran 23 adapté pour coopérer avec le cran 132 du levier de verrouillage 13 lorsque celui-ci est pivoté.

Le dispositif CPA 2 comprend enfin deux surfaces de butée 24, 25 respectivement à l'avant et à l'arrière, adaptées pour venir en butée respectivement contre le boitier 10 et en dessous du levier de verrouillage 13 pour éviter tout enlèvement intempestif du dispositif 2 dans sa position active de sécurisation. En outre, les ergots de retenue 220 se glissent sous des reliefs adaptés du boitier et empêchent ainsi l'enlèvement du CPA 2.

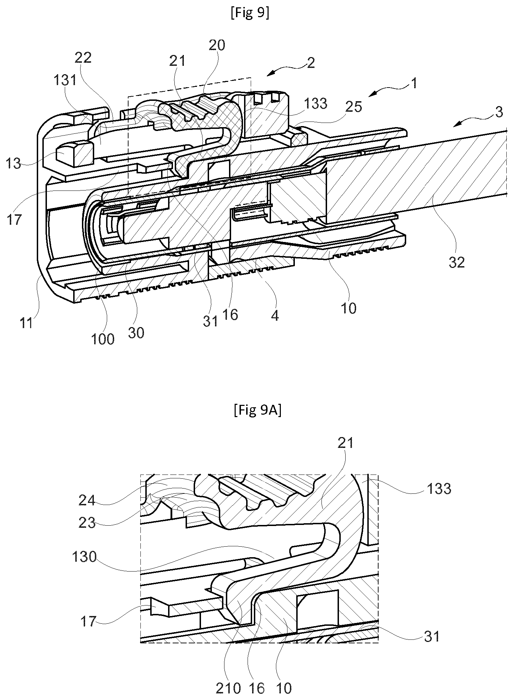

Les figures 9 et 9A illustrent un connecteur 1 selon l'invention avec son boitier 10 dans lequel est logé et maintenu un terminal 3 de câble et dans lequel le dispositif CPA 2 est assemblé dans sa position d'attente de verrouillage.

Dans cette position d'attente de verrouillage, le dispositif CPA 2 est bloqué d'une part par l'excroissance 210 de la languette 21 logée dans le logement 16 et d'autre part avec la surface arrière de la languette 21 en butée contre la surface intérieure de butée 133 du levier pivotant 13.

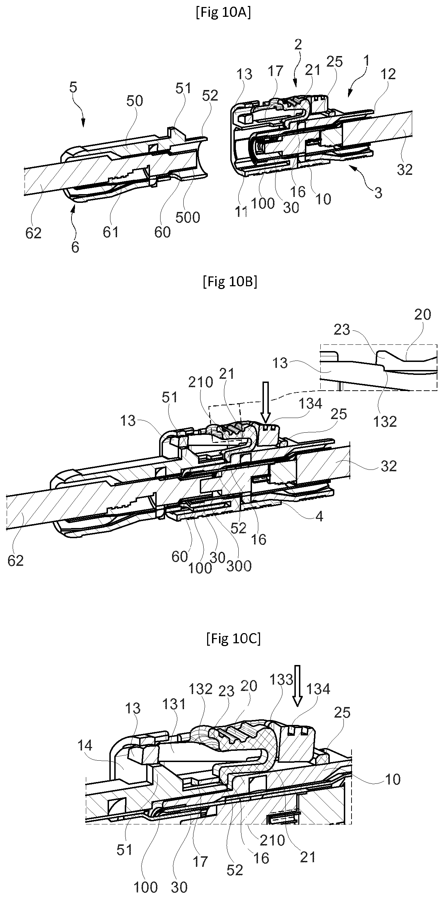

On décrit maintenant en référence aux figures 10A à 10E, les différentes étapes de connexion avec verrouillage d'un connecteur femelle 1 selon l'invention avec un connecteur complémentaire mâle 5 et sécurisation du verrouillage par le dispositif CPA 2.

Au préalable, le connecteur complémentaire mâle 5 comprend un boitier 50 à l'intérieur duquel est logé et maintenu un terminal 6 de câble complémentaire au terminal 3 montée et logée dans le boitier 10.

Ainsi, le conducteur 60 du terminal 6 est destiné à être connecté par accouplement avec le conducteur 30, par la face avant 11 du boitier 10. Le conducteur 60 est maintenu à l'intérieur d'un fût 500 au sein du boitier de connecteur 50.

Le corps 61 du terminal 6 est verrouillé à l'intérieur du boitier 10 et le câble 62 du terminal émerge du boitier 50 par sa face arrière.

Le boitier 50 comprend également sur sa périphérie extérieure un nez de verrouillage 51 pour le verrouillage des boitiers 10, 50 entre eux.

Etape a/ : On vient accoupler les deux connecteurs 1, 5 en les mettant en regard l'un de l'autre et en les faisant translater l'un vers l'autre pour en insérer un à l'intérieur de l'autre, comme symbolisé par la flèche noire en figure 10A. Dans cette phase d'approche en vue d'un accouplement, le levier 13 n'est pas pivoté et le dispositif CPA 2 est en position d'attente de verrouillage.

Etape b/: L'introduction du connecteur 5 dans le connecteur complémentaire 1 induit la mise en butée du nez de verrouillage 51 contre le dessous du levier de verrouillage 13, ce qui fait pivoter ce dernier autour de son pivot 130 (figure 10B). Dans cette phase, le cran de maintien 132 vient en appui contre le cran 23 du dispositif CPA, ce qui permet de bloquer, c'est-à-dire empêcher toute translation non souhaitée de ce dernier (figure 10B).

Etape c/ : En continuant l'insertion du conducteur 5 dans le connecteur complémentaire 1, l'extrémité 52 du boitier 50 vient soulever l'excroissance 210 de la languette 21, ce qui permet de dégager partiellement cette dernière du logement 16 (figure 10C). Dans cette phase, le levier 13 est toujours soulevé et la coopération entre les crans de maintien 23, 132 maintient le blocage en translation du dispositif CPA 2 (figure 10C).

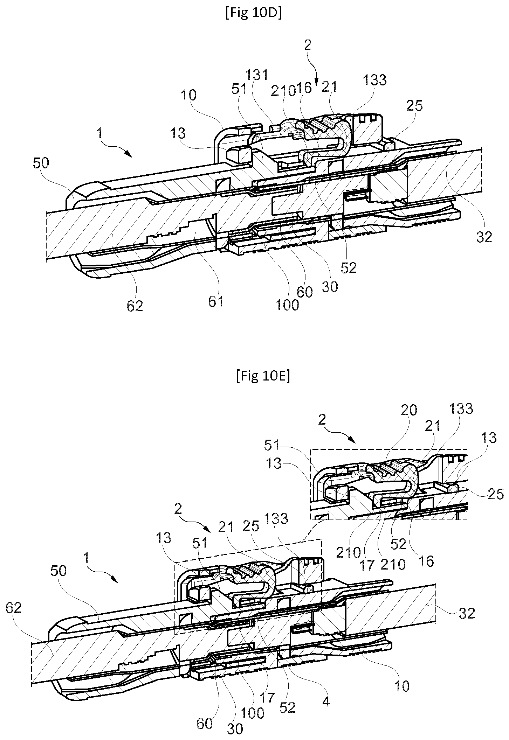

Etape d/ : Une fois le nez de verrouillage 51 encliqueté dans l'ouverture traversante 131 du levier 13, ce dernier est revenu dans sa position initiale non pivoté, et le verrouillage est réalisé (figure 10D). Dans cette position, le cran 23 du dispositif CPA 2 est libéré du cran 132 du levier 13, ce qui permet de débloquer le dispositif CPA 2 en translation puisque l'extrémité 52 du boitier 50 a complètement dégagé l'excroissance 210 du logement 16 (figure 10D).

Etape e/ : On termine alors par le déplacement en translation du dispositif CPA 2 par appui manuel sur la surface 20 prévue à cet effet. La translation dans le sens de la flèche noire en figure 9E, permet d'amener l'excroissance 210 dans le logement 17 (figure 10E).

Ainsi, le dispositif CPA 2 est bloqué dans sa position active de sécurisation du verrouillage. En effet, le nez de verrouillage 51 se trouve coincé d'une part par le levier 13 et l'excroissance 210 elle-même logée et maintenue dans le logement 17. Autrement dit, le deuxième logement loge l'ergot de verrouillage bloqué par le levier et, l'excroissance dans sa position active de sécurisation.

Dans cette position active, la butée 25 du dispositif CPA 2 est logée en dessous du levier 13, ce qui interdit le pivotement de ce dernier, et donc permet d'éviter un déverrouillage intempestif (figure 10E). Dans cette position active également, le dispositif CPA 2 est en butée mécanique par sa surface de butée 24 contre le boitier 10 (figure 10E).

Il suffit d'appliquer un effort suffisant de traction du CPA 2 vers l'arrière du connecteur 1 (selon le sens inverse de la flèche de la figure 10E) pour déverrouiller l'accouplement des connecteurs : l'ergot 210 est dégagé du logement 17, la butée 25 peut alors reculer et libérer la butée 133 pour un pivotement du levier de verrouillage 13 et un retrait du connecteur complémentaire.

D'autres variantes et avantages de l'invention peuvent être réalisés sans pour autant sortir du cadre de l'invention.

Ainsi, si dans l'ensemble des modes illustrés, le boitier qui est équipé d'un dispositif CPA conforme à l'invention est un boitier de type femelle, on peut tout à fait envisager que ce soit un boitier de type mâle.

L'invention n'est pas limitée aux exemples qui viennent d'être décrits ; on peut notamment combiner entre elles des caractéristiques des exemples illustrés au sein de variantes non illustrées.

## Revendications

1. Boitier (10) de connecteur (1), destiné à être accouplé avec un boitier (50) de connecteur complémentaire (5), le boitier s'étendant selon un axe longitudinal (X) et comprenant :
- un levier de verrouillage (13) solidaire du boitier, le levier étant pivotant autour d'un pivot (130) transversalement à l'axe longitudinal (X), le levier étant muni d'une ouverture traversante (131) adaptée pour coopérer par encliquetage avec un ergot de verrouillage (51) du boitier de connecteur complémentaire, de sorte à verrouiller le boitier de connecteur et celui complémentaire accouplés;
- un dispositif (2), dit d'assurance de position de connecteur (CPA), monté coulissant à l'intérieur du boitier entre une position d'attente du verrouillage et une position active dans laquelle il sécurise le verrouillage entre le boitier de connecteur et celui complémentaire, le dispositif CPA comprenant au moins une languette (21) dont l'extrémité libre est conformée en excroissance de sécurisation (210) configurée pour respectivement être :
• bloquée à l'intérieur d'un premier logement (16) du boitier dans la position d'attente,
• débloquée de sa position d'attente, grâce à un appui avec une partie d'extrémité (52), distincte de l'ergot (51), du boitier de connecteur complémentaire, lors de l'insertion de ce dernier dans le boitier (10) de connecteur (1), **caractérisé en ce que**
l'excroissance de sécurisation est
• bloquée à l'intérieur d'un deuxième logement (17) du boitier dans la position active de sécurisation, telle qu'elle assure un effort de déverrouillage entre le boitier et le boitier complémentaire.

2. Boitier (10) de connecteur (1) selon la revendication 1, le levier de verrouillage (13) étant venu de moulage avec le boitier.

3. Boitier (10) de connecteur (1) selon la revendication 1 ou 2, la languette (21) étant adaptée pour, lorsqu'elle est bloquée dans sa position d'attente, ne pas pouvoir coulisser dans sa position active de sécurisation si aucun accouplement du boitier avec le boitier complémentaire n'est réalisé.

4. Boitier (10) de connecteur (1) selon l'une des revendications précédentes, le deuxième logement (17) étant adapté pour que l'ergot de verrouillage (51) soit coincé entre l'excroissance (210), logée dans ledit logement (17) dans sa position active de sécurisation, et le levier (13).

5. Boitier (10) de connecteur (1) selon l'une des revendications précédentes, dans lequel :
- le levier (13) comprend au moins un cran de maintien (132) ;
- le dispositif CPA (2) comprend au moins un cran de maintien (23) adapté pour coopérer avec le cran de maintien du levier lorsque ce dernier est dans une position pivotée durant l'accouplement entre boitiers (10, 50) de sorte à maintenir le dispositif CPA (2) bloqué en translation.

6. Boitier (10) de connecteur (1) selon l'une des revendications précédentes, dans lequel le dispositif CPA (2) comprend au moins une surface de butée (25) adaptée pour se loger en dessous du levier (13) de sorte à bloquer le pivotement du levier dans la position active du dispositif CPA (2).

7. Boitier (10) de connecteur (1) selon l'une des revendications précédentes, dans lequel le dispositif CPA (2) comprend au moins une surface de butée (24) adaptée pour venir bloquer le dispositif CPA (2) contre le boitier (10), dans la position active du dispositif CPA (2).

8. Connecteur (1) comprenant :
- un boitier de connecteur (10) équipé d'un dispositif CPA (2) selon l'une des revendications précédentes ;
- un terminal (3) de câble électrique, logé et monté dans le boitier (10).

9. Connecteur (1) selon la revendication 8, comprenant un dispositif dit d'assurance de position du terminal (TPA) (4) qui maintient le terminal (3) dans le connecteur (10).

10. Procédé d'accouplement et verrouillage sécurisé d'un connecteur (1) selon l'une des revendications 8 ou 9 avec un connecteur (5) complémentaire, **caractérisé en ce qu'**il comprend les étapes suivantes :
a/ accouplement des boitiers de connecteurs (10, 20) avec insertion de l'un dans l'autre ;
b/ verrouillage mutuel des connecteurs (1, 5) au moyen de l'ergot de verrouillage (51) encliqueté dans l'ouverture traversante (131) du levier (13) ;
c/ déplacement en translation du dispositif CPA (2) dégagé de sa position d'attente par une partie d'extrémité (52) du boitier (50), jusqu'à ce qu'il atteigne sa position active de sécurisation du verrouillage dans laquelle il est logé dans le deuxième logement (17) du boitier (10).

## Patentansprüche

1. Gehäuse (10) eines Steckverbinders (1), das dazu bestimmt ist, mit einem Gehäuse (50) eines komplementären Steckverbinders (5) gekoppelt zu werden, wobei sich das Gehäuse entlang einer Längsachse (X) erstreckt und umfasst:
- einen Verriegelungshebel (13), der fest mit dem Gehäuse verbunden ist, wobei der Hebel um einen Drehzapfen (130) quer zu der Längsachse (X) schwenkbar ist, wobei der Hebel mit einer Durchgangsöffnung (131) versehen ist, die dazu geeignet ist, durch Einrasten mit einer Verriegelungsnase (51) des Gehäuses des komplementären Steckverbinders zusammenzuwirken, so dass das Steckverbindergehäuse und das komplementäre Gehäuse gekoppelt verriegelt werden;
- eine als Steckverbinderpositionssicherungsvorrichtung (CPA) bezeichnete Vorrichtung (2), die im Inneren des Gehäuses zwischen einer Wartestellung auf die Verriegelung und einer aktiven Stellung, in der sie die Verriegelung zwischen dem Steckverbindergehäuse und dem komplementären Gehäuse sichert, verschieblich montiert ist,
wobei die CPA-Vorrichtung mindestens eine Zunge (21) umfasst, deren freies Ende als Sicherungsvorsprung (210) geformt ist, der so ausgelegt ist, dass er:
• im Inneren einer ersten Aufnahme (16) des Gehäuses in der Wartestellung blockiert ist,
• aus seiner Wartestellung freigegeben wird dank einer Abstützung mit einem Endteil, das verschieden von der Nase (51) ist, des komplementären Steckverbindergehäuses (52) bei dessen Einführen in das Gehäuse (10) des Steckverbinders (1), **dadurch gekennzeichnet, dass** der Sicherungsvorsprung
• im Inneren einer zweiten Aufnahme (17) des Gehäuses in der aktiven Sicherungsstellung blockiert ist, so dass er eine Entriegelungskraft zwischen dem Gehäuse und dem komplementären Gehäuse gewährleistet.

2. Gehäuse (10) eines Steckverbinders (1) nach Anspruch 1, **dadurch gekennzeichnet, dass** der Verriegelungshebel (13) einstückig mit dem Gehäuse ist.

3. Gehäuse (10) eines Steckverbinders (1) nach Anspruch 1 oder 2, wobei die Zunge (21) dazu angepasst ist, wenn sie in ihrer Wartestellung blockiert ist, nicht in ihre aktive Sicherungsstellung verschoben werden zu können, wenn keine Kopplung des Gehäuses mit dem komplementären Gehäuse ausgeführt wird.

4. Gehäuse (10) eines Steckverbinders (1) nach einem der vorhergehenden Ansprüche, wobei die zweite Aufnahme (17) dazu angepasst ist, dass die Verriegelungsnase (51) zwischen dem in der Aufnahme (17) in seiner aktiven Sicherungsstellung aufgenommenen Vorsprung (210) und dem Hebel (13) eingeklemmt ist.

5. Gehäuse (10) eines Steckverbinders (1) nach einem der vorhergehenden Ansprüche, wobei:
- der Hebel (13) mindestens eine Halteraste (132) umfasst;
- die CPA-Vorrichtung (2) mindestens eine Halteraste (23) umfasst, die dazu angepasst ist, mit der Halteraste des Hebels zusammenzuwirken, wenn Letzterer während des Koppelns zwischen Gehäusen (10, 50) in einer geschwenkten Stellung ist, so dass die CPA-Vorrichtung (2) translatorisch blockiert gehalten wird.

6. Gehäuse (10) eines Steckverbinders (1) nach einem der vorhergehenden Ansprüche, wobei die CPA-Vorrichtung (2) mindestens eine Anschlagfläche (25) umfasst, die dazu angepasst ist, unter dem Hebel (13) aufgenommen zu werden, so dass das Schwenken des Hebels in die aktive Stellung der CPA-Vorrichtung (2) blockiert wird.

7. Gehäuse (10) eines Steckverbinders (1) nach einem der vorhergehenden Ansprüche, wobei die CPA-Vorrichtung (2) mindestens eine Anschlagfläche (24) umfasst, die dazu angepasst ist, die CPA-Vorrichtung (2) gegen das Gehäuse (10) in der aktiven Stellung der CPA-Vorrichtung (2) zu blockieren.

8. Steckverbinder (1), umfassend:
- ein Steckverbindergehäuse (10), das mit einer CPA-Vorrichtung (2) nach einem der vorhergehenden Ansprüche ausgestattet ist;
- einen Endverschluss (3) eines Stromkabels, der in dem Gehäuse (10) aufgenommen und montiert ist.

9. Steckverbinder (1) nach Anspruch 8, umfassend eine als Positionssicherungsvorrichtung des Endverschlusses (TPA) bezeichnete Vorrichtung (4), die den Endverschluss (3) in dem Steckverbinder (10) hält.

10. Verfahren zum Koppeln und sicheren Verriegeln eines Steckverbinders (1) nach einem der Ansprüche 8 oder 9 mit einem komplementären Steckverbinder (5), **dadurch gekennzeichnet, dass** es die folgenden Schritte umfasst:
a/ Koppeln der Steckverbindergehäuse (10, 20) mit Einführen des einen in das andere;
b/ wechselseitiges Verriegeln der Steckverbinder (1, 5) mittels der Verriegelungsnase (51), die in der Durchgangsöffnung (131) des Hebels (13) eingerastet ist;
c/ translatorisches Bewegen der CPA-Vorrichtung (2), die durch einen Endteil (52) des Gehäuses (50) aus ihrer Wartestellung freigegeben wird, bis sie ihre aktive Stellung zur Verriegelungssicherung erreicht, in der sie in der zweiten Aufnahme (17) des Gehäuses (10) aufgenommen ist.

## Claims

1. Connector (1) housing (10) intended to be coupled to a complementary connector (5) housing (50), the housing extending along a longitudinal axis (X) and comprising:
- a locking lever (13) secured to the housing, the lever being able to pivot about a pivot (130) transversely to the longitudinal axis (X), the lever being provided with a through-opening (131) designed to interact by snap-fastening with a locking lug (51) of the complementary connector housing, so as to lock the coupled connector housing and complementary connector housing;
- a device (2), referred to as a connector position assurance (CPA) device, mounted so as to be able to slide inside the housing between a locking stand-by position and an active position in which it secures the locking between the connector housing and complementary connector housing;
the CPA device comprising at least one tongue (21), the free end of which is in the form of a securing protrusion (210) configured to be respectively:
• blocked inside a first recess (16) of the housing in the stand-by position;
• released from its stand-by position, by virtue of being pressed by an end portion (52), which is distinct from the lug (51), of the complementary connector housing, when the latter is inserted into the connector (1) housing (10), **characterized in that** the securing protrusion is
• blocked inside a second recess (17) of the housing in the active securing position, such that it provides an unlocking force between the housing and the complementary housing.

2. Connector (1) housing (10) according to Claim 1, the locking lever (13) being moulded together with the housing.

3. Connector (1) housing (10) according to Claim 1 or 2, the tongue (21) being designed, when it is blocked in its stand-by position, so as to be unable to slide into its active securing position if the housing has not been coupled to the complementary housing.

4. Connector (1) housing (10) according to one of the preceding claims, the second recess (17) being designed such that the locking lug (51) is trapped between the protrusion (210), which is housed in said recess (17) in its active securing position, and the lever (13).

5. Connector (1) housing (10) according to one of the preceding claims, wherein:
- the lever (13) comprises at least one holding detent (132);
- the CPA device (2) comprises at least one holding detent (23) designed to interact with the holding detent of the lever when the latter is in a pivoted position during the coupling between housings (10, 50) so as to keep the CPA device (2) blocked in translation.

6. Connector (1) housing (10) according to one of the preceding claims, wherein the CPA device (2) comprises at least one stop surface (25) designed to be housed below the lever (13) so as to block the lever from pivoting when the CPA device (2) is in the active position.

7. Connector (1) housing (10) according to one of the preceding claims, wherein the CPA device (2) comprises at least one stop surface (24) designed to block the CPA device (2) against the housing (10), when the CPA device (2) is in the active position.

8. Connector (1) comprising:
- a connector housing (10) equipped with a CPA device (2) according to one of the preceding claims;
- an electrical cable terminal (3), which is housed and mounted in the housing (10).

9. Connector (1) according to Claim 8, comprising a device, referred to as a terminal position assurance (TPA) device (4), which holds the terminal (3) in the connector (10).

10. Method for securely locking and coupling a connector (1) according to either of Claims 8 and 9 to a complementary connector (5), **characterized in that** it comprises the following steps:
a/ coupling the connector housings (10, 20), with insertion of one into the other;
b/ mutually locking the connectors (1, 5) by means of the locking lug (51) snap-fastened into the through-opening (131) of the lever (13);
c/ moving the CPA device (2), which has been moved out of its stand-by position by an end portion (52) of the housing (50), in translation until it reaches its active locking securing position in which it is housed in the second recess (17) of the housing (10).
